Europäisches Patentamt

European Patent Office

Office européen des brevets

(11) Veröffentlichungsnummer: **0 098 507**
B1

# EUROPÄISCHE PATENTSCHRIFT

(45) Veröffentlichungstag der Patentschrift:
01.06.88

(51) Int. Cl.⁴: **G 01 L 1/18**, G 01 B 7/18

(21) Anmeldenummer: 83106293.0

(22) Anmeldetag: 28.06.83

(54) Integrierter Sensor für Kraft und Weg.

(30) Priorität: 02.07.82 DE 3224792

(43) Veröffentlichungstag der Anmeldung:
18.01.84 Patentblatt 84/3

(45) Bekanntmachung des Hinweises auf die Patenterteilung:
01.06.88 Patentblatt 88/22

(84) Benannte Vertragsstaaten:
AT DE FR GB IT

(56) Entgegenhaltungen:
DE - A - 2 932 956

IEEE TRANSACTIONS ON BIOMEDICAL ENGINEERING,
Band BME-24, Nr. 3, Mai 1977, Seiten 226-231, New York,
US; D.C. JEUTTER et al.: "Silicon force transducer for
extraluminal measurement of oviduct contractile
activity"
PATENTS ABSTRACTS OF JAPAN, Band 5, Nr. 202
(P-95)(874), 22. Dezember 1981; & JP - A - 56 124030
(NIPPON GAKKI SEIZO K.K.) 29.09.1981
PATENTS ABSTRACTS OF JAPAN, Band 5, Nr. 103
(E-64)(775), 3. Juli 1981; & JP - A - 56 45080 (HITACHI
SEISAKUSHO K.K.) 24.04.1981

(73) Patentinhaber: Siemens Aktiengesellschaft Berlin und
München, Wittelsbacherplatz 2, D-8000 München 2 (DE)

(72) Erfinder: Roloff, Herbert F., Dr. Dipl.-Phys.,
Akademiestrasse 21, D-8000 München 40 (DE)
Erfinder: Köllner, Hartwig W., Dipl.-Ing, Münchner
Freiheit 14, D-8000 München 40 (DE)

**Beschreibung**

Die Erfindung bezieht sich auf einen integrierten Sensor für Kraft und Weg, der aus einem als piezoresistive Sonde ausgebildeten Siliciumplättchen besteht, welches für eine mechanische Beaufschlagung vorgesehen und mit wenigstens zwei an ein elektrisches Gerät zu legenden bzw. für die Spannungsversorgung der piezoresistiven Sonde zuständigen elektrischen Anschlüssen versehen ist.

Eine piezoresistive Sonde dieser Art ist in der DE-OS 2 932 956 beschrieben. Sie ist für eine Reihe von Aufgaben mit Erfolg verwendbar. So ist man aus Zuverlässigkeitsgründen bei bestimmten Anwendungen, z.B. für die Saugdruckregelung in Staubsaugern oder bei der Geschwindigkeitsregelung von Nähmaschinen und anderer Haushaltsgeräte bzw. bei der Drehzahlregelung von Bohrmaschinen, bestrebt, das für die Einstellung der Betriebsbedingungen über die Stromversorgung des Geräts in üblicher Weise verwendete Potentiometer durch ein sich in einer abgeschlossenen Umgebung befindendes Halbleiterelement zu ersetzen, welches dann die Aufgabe hat, die Bewegung einer Membran bzw. eines Hebels oder dergl. in ein dazu proportionales elektrisches Signal umzuformen. Durch die Anwendung eines solchen als piezoresistive Sonde ausgestalteten Halbleiterelements fällt der bei den Potentiometern gegebene Nachteil der Anfälligkeit gegenüber Staub und Faserteilchen, die beim Betrieb der zu steuernden Vorrichtung entstehen, weg, weil die Halbleitersonde sich in einer abgeschlossenen Umgebung befindet.

Andererseits muss dafür gesorgt werden, dass eine gute Kraftübertragung auf den Halbleiterkörper der Sonde gewährleistet ist, obwohl sich die Sonde in einer Umgebung befinden soll, die gegenüber dem durch die Sonde zu beaufschlagenden elektrischen Gerät, z.B. dem Staubsauger usw. völlig abgeschlossen ist. Ausserdem soll die Umgebung ihrerseits so ausgestaltet sein, dass sie aufgrund von Temperaturänderungen in dem für die Sonde vorgesehenen Arbeitsbereich keine die Arbeitsfunktion der Sonde merklich verfälschende Einflüsse auf die Sonde ausüben kann. Schliesslich ist auch eine stabile Halterung der Sonde in ihrer Umgebung inanbetracht der von der Sonde jeweils zu lösenden Aufgabe von erheblicher Bedeutung.

Es ist Aufgabe der Erfindung, eine Ausgestaltung für den oben definierten Sensor für Kraft und Weg anzugeben, die den genannten Anforderungen in vollem Masse Rechnung trägt. Ausserdem ist es das Ziel der Erfindung, eine kostensparende Ausgestaltung zu ermöglichen.

Hierzu ist gemäss der Erfindung vorgesehen, dass das Siliciumplättchen der piezoresistiven Sonde auf einem der Kraftübertragung auf die Sonde dienenden, biegsamen Metallstreifen befestigt und ausserdem in eine aus festem Isoliermaterial bestehende Umgebung eingebettet ist, durch welche die von den einzelnen elektrischen Anschlüssen des Siliciumplättchens ausgehenden leitenden Verbindungen als auch der die Sonde tragende Metallstreifen in abgedichteter Weise nach aussen geführt sind.

Vorzugsweise besteht die den Siliciumkörper der Sonde aufnehmende Umgebung aus einem elektrisch isolierenden organischen Kunststoff.

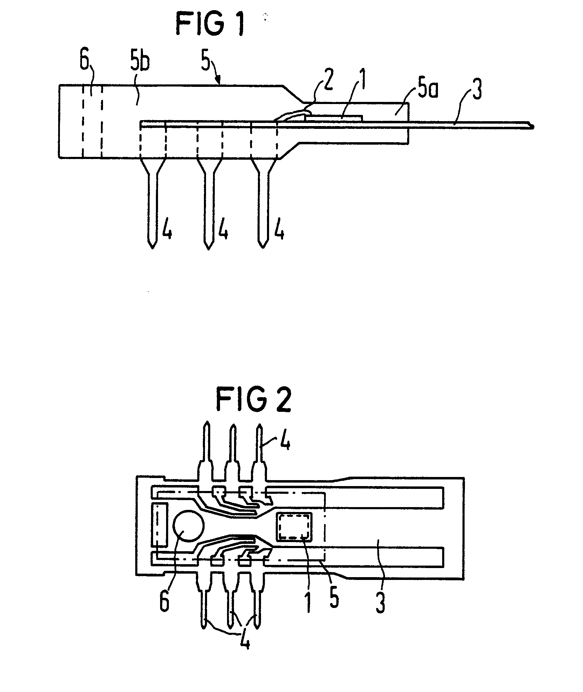

Die Erfindung wird nun anhand der beiden Figuren näher beschrieben. Dabei stellt Figur 1 einen Querschnitt durch die fertige Anlage und Figur 2 den Fertigungszustand der Anlage vor dem Aufbringen der Kunststoffeinbettung in Aufsicht dar.

Wie aus Figur 1 ersichtlich, besteht bei einer bevorzugten Ausgestaltung der Erfindung die die Sonde aufnehmende Isolierstoffumhüllung 5 aus zwei Bereichen 5a und 5b. Das Siliciumplättchen 1 der piezoresistiven Sonde befindet sich dabei in dem dünneren Bereich 5a, aus dem der die Sonde 1 tragende Metallstreifen 3 zungenartig herausragt. Die einzelnen Anschlüsse 2 des Siliciumplättchens 1 sind mittels je eines dünnen Drähtchens an je einen in abgedichteter Weise nach aussen führenden externen Anschluss 4 gelegt.

Die externen Anschlüsse 4 dienen zur Versorgung der piezoresistiven Sonde 1 mit der für den Betrieb erforderlichen elektrischen Versorgungsspannung. Ausserdem wird über solche Anschlüsse 4 die Verbindung zu dem durch die piezoresistive Sonde 1 zu steuernden Gerät, z.B. einem Strom- oder Spannungsmesser oder einer elektronisch zu steuernden bzw. zu regelnden Maschine, vermittelt.

Die Unterteilung der kompakten Kunststoffeinbettung 5 in einen dünneren und sich parallel zur Metallzunge 3 erstreckenden Bereich 5a und einem sich an den Bereich 5a unmittelbar anschliessenden dickeren Bereich 5b hat den wesentlichen Vorteil, dass die Halterung der Gesamtanlage, vorausgesetzt, dass sie ausschliesslich zu einem auf den dickeren Teil 5b beschränkten mechanischen Kontakt der Gesamtanlage mit einem Halteorgan führt, keine zusätzliche mechanische Belastung des Siliciumplättchens 1 und damit der piezoresistiven Sonde mit sich bringt. Ausserdem hat sie den Vorteil, dass der die Metallzunge 3 und das Siliciumplättchen unmittelbar umgebende Bereich 5a im Vergleich zum Bereich 5b bei einer mechanischen Betätigung der Metallzunge 3 durch zu messende oder auszuwertende äussere Kräfte eine weitaus stärkere Beeinflussung des Siliciumplättchens 1 durch die über die Metallzunge 3 übertragene mechanische Steuerung gewährleistet, als dies der Fall wäre, wenn beide Bereiche 5a und 5b bezüglich ihrer Querschnitte einander gleich wären.

Aus dem gleichen Grund sowie im Interesse einer zusätzlichen Verbesserung der Überlastbarkeit der Anlage empfiehlt es sich ausserdem, die Metallzunge 3, wenigstens soweit sie sich im Bereich 5a der Kunststoffeinbettung 5 befindet, als gleichmässig dünnen Metallstreifen auszubilden. Auf den Metallstreifen 3 ist dann das Siliciumplättchen 1 der piezoresistiven Sonde durch Aufkleben oder durch Auflöten oder durch Auflegieren befestigt.

Durch die Wahl des Materials für den Metallstreifen 3 und damit dessen Elastizität und Härte, sowie durch die Art der Befestigung des Siliciumplättchens 1 auf dem zungenförmigen Metallstreifen 3 und schliesslich durch die Wahl des Materials für die Isolierstoffeinbettung 5 können, wie man leicht einsieht, die Ansprechempfindlichkeit der Sensoranlage und damit deren Einsatzmöglichkeit in weiten Grenzen variiert werden. Aus Gründen der Fertigungstechnik und der Anpassung der thermischen Ausdehnungskoeffizienten einerseits an den Siliciumkristall 1 und andererseits an die Isolierstoffeinbettung 5 eignet sich in besonderem Masse die Fe-Ni-Legierung Vacodil oder eine dieser ähnliche Eisen-Nickellegierung bzw. eine Kupfer-Eisenlegierung. Die Stärke des die Metallzunge 3 bildenden Streifens wird zweckmässig auf 0,1–1 mm, insbesondere auf 0,2 bis 0,3 mm eingestellt.

Als Material für die Isolierstoffeinbettung 5 eignen sich vor allem Kunststoffe, z.B. die handelsüblichen Press- oder Vergussmassen, wie sie auch sonst für die Einbettung von Halbleitervorrichtungen, z.B. monolithisch integrierte Schaltungen, eingesetzt werden. Da die aufgrund einer Biegebelastung der Metallzunge 3 auf das Siliciumplättchen 1 der piezoresistiven Sonde zu übertragende Kraftwirkung unter Vermittlung des Bereiches 5a der Kunststoffeinbettung 5 zustandekommt, wird man in allen Fällen die Stärke des die Zunge 3 bildenden Metallstreifens und die Stärke des Bereiches 5a der Kunststoffeinbettung 5 in diesem Sinne aufeinander abstimmen. Dabei muss auch die Stärke des Siliciumplättchens 1 berücksichtigt werden. Am Schluss dieser Darstellung wird ein entsprechendes Beispiel mit Zahlen angegeben.

Der dickere Teil 5b der Kunststoffumhüllung 5 dient, wie bereits erwähnt, der Befestigung der Gesamtanordnung an einer Unterlage, z.B. an dem über die piezoresistive Sonde zu steuernden Gerät. Hierzu kann der dickere Teil 5b mit einer für die Aufnahme einer Befestigungsschraube bestimmten Durchbohrung 6 versehen sein. Ausserdem sind die äusseren Anschlüsse 4 am dickeren Teil 5b der Kunststoffeinbettung 5 angeordnet, wie dies aus Figur 1 und aus Figur 2 ersichtlich ist.

Hierzu ist die aus Figur 2 in Aufsicht dargestellte Metallplatine vorgesehen, wie sie an sich für die Montage und Kontaktierung integrierter Halbleiterschaltungen an sich üblich ist, wobei jedoch in geometrischer Beziehung, wie Figur 2 zeigt, Abweichungen gegenüber der üblichen Ausgestaltung gegeben sind. Der mittlere Teil der Platine stellt den die Metallzunge 3 bildenden Metallstreifen dar, auf der das Siliciumplättchen 1 der Sonde befestigt ist. Das die Sonde bildende Siliciumplättchen 1 ist insbesondere entsprechend den Offenbarungen der DE-OS 2 932 956 ausgestaltet.

Der Metallstreifen 3 ist bis in den dickeren Teil 5b der Kunststoffumhüllung 5 hinein verlängert und umgibt die Durchbohrung 6, wie dies aus Figur 2 ersichtlich ist. Abseits vom Streifen 3 sind beiderseits die die externen Anschlüsse 4 Pins angeordnet. Sie werden dann mit Ausnahme ihrer dem externen Anschluss der Anlage dienenden Enden von dem dickeren Teil 5b der Kunststoffumhüllung 5 umgeben. Die in Figur 2 nicht eingezeichneten Verbindungsdrähte zwischen den elektrischen Anschlüssen des Siliciumplättchens 1 zu den einzelnen Pins 4 sind an demjenigen Teil des betreffenden Pins 4 in üblicher Weise befestigt, der dann von der Kunststoffeinbettung 5 – und zwar von deren dickerem Teil – mitumfasst wird. Mit Ausnahme der Pins 4 und des Metallstreifens 3 werden alle Metallteile, die sich nach Aufbringung der Kunststoffeinbettung ausserhalb derselben befinden, in üblicher Weise entfernt.

Das Aufbringen der Kunststoffeinbettung 5 erfolgt bevorzugt durch Umgiessen oder durch Umpressen und entspricht in ihren Einzelheiten den bei der Montage von integrierten Halbleiterchips üblichen Massnahmen.

Zahlenbeispiel:
Dicke des Metallstreifens 0,25 mm
Dicke des Siliciumplättchens 0,2 mm
Dicke des dünneren Bereiches der Kunststoffeinbettung 1,5–2 mm
Breite der Metallzunge 2 bis 5 mm
Breite des mittig aufgebrachten Siliciumplättchens 1 bis 3 mm
Stärke des dickeren Bereiches der Kunststoffeinbettung einschliesslich der von ihr umfassten Metallteile 3 und 4 z.B. 3 bis 4 mm.

Es ist verständlich, dass auch andere Ausgestaltungen des erfindungsgemässen Sensors für Kraft und Weg innerhalb der Erfindung möglich sind. Die anhand der beiden Figuren beschriebene Ausgestaltung hat sich jedoch in besonderem Masse bewährt.

**Patentansprüche**

1. Integrierter Sensor für Kraft und Weg, der aus einem als piezoresistive Sonde ausgebildeten Siliciumplättchen besteht, welches für eine mechanische Beaufschlagung vorgesehen und mit wenigstens zwei an ein elektrisches Gerät zu legenden bzw. für die Spannungsversorgung der piezoresistiven Sonde zuständigen elektrischen Anschlüssen versehen ist, dadurch gekennzeichnet, dass das Siliciumplättchen (1) der piezoresistiven Sonde auf einem der Kraftübertragung auf die Sonde dienenden, biegsamen Metallstreifen (3) befestigt und ausserdem in eine aus festem Isoliermaterial bestehende Umgebung (5) eingebettet ist, durch welche die von den einzelnen elektrischen Anschlüssen des Siliciumplättchens (1) ausgehenden leitenden Verbindungen (4) als auch der die Sonde tragende Metallstreifen (3) in abgedichteter Weise nach aussen geführt sind.

2. Sensor nach Anspruch 1, dadurch gekennzeichnet, dass die neben dem Metallstreifen (3) die Umgebung des Siliciumplättchens (1) bildende und vorzugsweise aus einem Kunststoff bestehende Einbettung (5) aus einem das Siliciumplättchen (1) sowie den Metallstreifen (3) aufnehmenden dünneren Teil (5a) und einem der Halterung bzw. Befestigung des Sensors z.B. an einem mittels

des Sensors zu steuernden Gerät dienenden dikkeren Teil (5b), über welchen die elektrischen Anschlüsse der Sonde (1) nach aussen geführt sind, besteht.

3. Sensor nach Anspruch 2, dadurch gekennzeichnet, dass der dünnere Bereich (5a) der isolierenden Einbettung (5) symmetrisch zu dem Siliciumplättchen (1) der Sonde und dem es tragenden Metallstreifen (3) ausgestaltet ist.

4. Sensor nach einem der Ansprüche 1 bis 3, dadurch gekennzeichnet, dass der Metallstreifen (3) aus einer Eisen-Nickel-Legierung oder einer Eisen-Kupfer-Legierung besteht.

5. Sensor nach einem der Ansprüche 1 bis 4, dadurch gekennzeichnet, dass die Isolierstoffeinbettung (5) der Sonde (1) unter Anwendung einer Press- oder einer Gussmasse hergestellt ist.

**Claims**

1. An integrated sensor for force and displacement which consists of a silicon wafer in the form of a piezo-resistive probe which is to be acted upon mechanically and is provided with at least two electrical terminals which are to be connected to an electrical device, or which are responsible for the voltage supply of the piezo-resistive probe, characterised in that the silicon wafer (1) of the piezo-resistive probe is attached to a flexible metal strip (3) which serves to transmit force to the probe, and is also embedded in an environment (5) which consists of solid insulating material and through which the conductive connections (4) coming from the individual electrical terminals of the silicon wafer (1), together with the metal strip (3) which carries the probe, lead outwardly in sealed fashion.

2. A sensor as claimed in Claim 1, characterised in that the bedding (5) which, in addition to the metal strip (3), forms the surroundings of the silicon wafer (1) and preferably consists of a synthetic resin material, consists of a thinner part (5a) which accommodates the silicon wafer (1) and the metal strip (3) and of a thicker part (5b) which serves for the support or attachment of the sensor, for example, to a device which is to be controlled by means of the sensor, and through which thicker part the electrical terminals of the probe (1) lead to the outside.

3. A sensor as claimed in Claim 2, characterised in that the thinner region (5a) of the insulating bedding (5) is designed to be symmetrical to the silicon wafer (1) of the probe and to the metal strip (3) which carries it.

4. A sensor as claimed in one of Claims 1 to 3, characterised in that the metal strip (3) consists of an iron-nickel alloy, or an iron-copper alloy.

5. A sensor as claimed in one of Claims 1 to 4, characterised in that the insulating bedding (5) of the probe (1) is produced using a moulding or casting composition.

**Revendications**

1. Capteur de force et de déplacement à circuit intégré, qui est constitué par une plaquette de silicium réalisée en tant que sonde piézorésistive, laquelle plaquette est prévue pour être soumise à une contrainte mécanique et est pourvue d'au moins deux bornes de raccordement électrique à relier avec un appareil électrique ou à recevoir la tension d'alimentation pour la sonde piezorésistive, caractérisé par le fait que la plaque de silicium (1) de la sonde piezorésistive est fixée sur une bande métallique flexible (3) servant à transmettre la force à la sonde et est en outre enrobée par une enveloppe (5) faite avec un matériau isolant solide et traversée de façon étanche par les liaisons conductrices (4) issues des bornes électriques individuelles de la plaquette de silicium (1) ainsi que par la bande métallique (3) qui porte la sonde.

2. Capteur selon la revendication 1, caractérisé par le fait que l'enrobage (5) qui forme, près de la bande métallique (3), l'enveloppe de la plaquette de silicium (1) et qui est de préférence faite avec une matière plastique, est constitué par une partie mince (5a) recevant la plaquette de silicium (1) ainsi que la bande métallique (3), et par une partie plus épaisse (5b) qui sert de support ou de moyen de fixation du capteur, par exemple, à un appareil à contrôler à l'aide du capteur, et à l'aide de laquelle les bornes électriques de raccordement de la sonde (1) sont amenés à l'extérieur.

3. Capteur selon la revendication 2, caractérisé par le fait que la partie mince (5a) de l'enrobage (5) est conformée de façon symétrique par rapport à la plaquette de silicium (1) de la sonde et par rapport à la bande métallique (3) qui porte ladite plaquette.

4. Capteur selon l'une des revendications 1 à 3, caractérisé par le fait que la bande métallique (3) est réalisée avec un alliage Fer-nickel ou un alliage Fer-cuivre.

5. Capteur selon l'une des revendications 1 à 4, caractérisé par le fait que l'enrobage en matière isolante (5) de la sonde (1) est réalisé avec la mise en œuvre d'une masse moulable ou coulable.

# FIG 1

# FIG 2